# EUROPEAN PATENT APPLICATION

(11) **EP 2 383 829 A1**
(43) Date of publication of application: **02.11.2011**
(21) Application number: 09805890.2
(22) Date of filing: 21.01.2009
(51) Int. Cl.: H01M 10/36, H01M 4/62, H01M 6/18

(54) **SULFIDE SOLID ELECTROLYTE MATERIAL**

(71) Applicant: Toyota Jidosha Kabushiki Kaisha, Toyota-shi, Aichi 471-8571 (JP)
(72) Inventor: HAMA, Shigenori, Toyota-shi Aichi 471-8571 (JP); UENO, Yukiyoshi, Toyota-shi Aichi 471-8571 (JP); TSUCHIDA, Yasushi, Toyota-shi Aichi 471-8571 (JP); NAGASE, Hiroshi, Toyota-shi Aichi 471-8571 (JP); KAMIYA, Masato, Toyota-shi Aichi 471-8571 (JP)
(74) Representative: Intès, Didier Gérard André
(86) International application number: PCT/JP2009/050848
(87) International publication number: WO 2010/084583

(57) **Abstract**

A main object of the present invention is to provide a sulfide solid electrolyte material that generates little hydrogen sulfide. To achieve the object, the present invention provides a sulfide solid electrolyte material which has a LiSbS₂ structure.

## Description

### Technical Field

The present invention relates to a sulfide solid electrolyte material that generates little hydrogen sulfide.

### Background Art

In recent years, information technology-related devices and communication devices such as personal computers, video cameras, and mobile phones have rapidly become popular, and therefore importance is placed on the development of batteries for use as power sources of such devices. Further, also in the field of, for example, automobile industry, high-power and high-capacity batteries for electric cars and hybrid cars are being developed. Among various batteries, lithium batteries are now receiving attention from the viewpoint of high energy density.

Conventional commercially-available lithium batteries use a liquid electrolyte containing a flammable organic solvent, and therefore need to have a safety device that suppresses temperature rise during short circuit and to be improved in structure and material to prevent short circuit.

On the other hand, all-solid-state lithium batteries using a solid electrolyte layer instead of a liquid electrolyte have no flammable organic solvent therein, and therefore their safety devices can be simplified. For this reason, it is believed that such all-solid-state lithium batteries are advantageous in terms of production cost and productivity. Additionally, as a solid electrolyte material for forming such a solid electrolyte layer, a sulfide solid electrolyte material is known.

A sulfide solid electrolyte material has high Li ion conductivity, and is therefore useful for achieving high-power batteries. For this reason, various studies have been heretofore conducted on such a sulfide solid electrolyte material. For example, Patent Document 1 discloses a sulfide solid electrolyte material having a glass phase mainly containing Li₂S and P₂S₅. This sulfide solid electrolyte material is advantageous in that its Li ion conductivity is high, but has a problem that it generates a large amount of hydrogen sulfide through contact with water (including moisture; the same applies hereinafter) due to its high reactivity with water, which is disadvantageous from the viewpoint of safety.

Further, Non-Patent Document 1 discloses a polycrystal of Li₃SbS₃ produced by a solid phase process. This polycrystal has a Li ion conductivity of about 10⁻⁷ S/cm. Further, Patent Document 2 discloses a method for producing a sulfide solid electrolyte material by mechanical milling.

Patent Document 1: Japanese Patent Application Laid-open (JP-A) No. 2002-109955
Patent Document 2: JP-A No. 2004-265685
Non-Patent Document 1: J. Olivier-Fourcade et al., "Modification de la nature de la conductivite electrique par creation de sites vacants dans les phases a caractere semi-coducteur du systeme Li2S-Sb2S3", Solid State Ionics. , Vol. 9-10, Part 1, December 1983, p 135-138

### Disclosure of the Invention

### Problem to be Solved by the Invention

As described above, a conventional sulfide solid electrolyte material has a problem that it generates a large amount of hydrogen sulfide through contact with water. In view of the problem, it is a main object of the present invention to provide a sulfide solid electrolyte material that generates little hydrogen sulfide.

### Means for Solving the Problem

In order to achieve the above object, the present invention provides a sulfide solid electrolyte material having a LiSbS₂ structure.

Since the sulfide solid electrolyte material according to the present invention has a LiSbS₂ structure highly stable to water, the amount of hydrogen sulfide generated can be reduced. Therefore, the use of the sulfide solid electrolyte material according to the present invention makes it possible to obtain, for example, a highly-safe lithium battery.

The sulfide solid electrolyte material according to the present invention preferably uses a Li₂S-Sb₂S₃-containing composition containing Li₂S and Sb₂S₃. This makes it possible to efficiently form a LiSbS₂ structure.

In the present invention, the Li₂S-Sb₂S₃-containing composition preferably contains only the Li₂S and the Sb₂S₃. This makes it easy to control a LiSbS₂ structure content.

In the present invention, a molar fraction of Li₂S contained in the Li₂S-Sb₂S₃-containing composition is preferably less than 75%. This makes it possible to reliably form a LiSbS₂ structure.

In the present invention, the Li₂S-Sb₂S₃-containing composition preferably further contains a sulfide material in addition to the Li₂S and the Sb₂S₃. This makes it possible to obtain a sulfide solid electrolyte material having high Li ion conductivity.

In the present invention, the sulfide material is preferably a sulfide of B, P, Si, Al, or Ge. This makes it possible to obtain a sulfide solid electrolyte material having higher Li ion conductivity.

The present invention also provides a lithium battery comprising a cathode active material layer containing a cathode active material, an anode active material layer containing an anode active material, and an electrolyte layer formed between the cathode active material layer and the anode active material layer, wherein at least one of the cathode active material layer, the anode active material layer, and the electrolyte layer contains the above-described sulfide solid electrolyte material.

According to the present invention, the use of the above-described sulfide solid electrolyte material makes it possible to provide a lithium battery that generates little hydrogen sulfide.

In the present invention, the electrolyte layer is preferably a solid electrolyte layer made of the above-described sulfide solid electrolyte material. This makes it possible to obtain a highly-safe lithium battery (all-solid-state battery).

The present invention provides a method for producing a sulfide solid electrolyte material, comprising the steps of: preparing a raw material composition containing a Li element, a Sb element, and a S element in such a ratio that a LiSbS₂ structure can be formed; and synthesizing a sulfide solid electrolyte material having the LiSbS₂ structure from the raw material composition by mechanical milling.

According to the present invention, it is possible to obtain a sulfide solid electrolyte material having a LiSbS₂ structure by mechanically milling a raw material composition having a predetermined composition.

In the present invention, the raw material composition is preferably a Li₂S-Sb₂S₃-containing composition containing Li₂S and Sb₂S₃. This makes it possible to efficiently form a LiSbS₂ structure.

In the present invention, the Li₂S-Sb₂S₃-containing composition preferably contains only the Li₂S and the Sb₂S₃. This makes it easy to control a LiSbS₂ structure content.

In the present invention, a molar fraction of Li₂S contained in the Li₂S-Sb₂S₃-containing composition is preferably less than 75%. This makes it possible to reliably form a LiSbS₂ structure.

### Effect of the Invention

The sulfide solid electrolyte material according to the present invention has the advantage that even when it comes into contact with water, generation of hydrogen sulfide can be suppressed.

### Brief Description of the Drawings

FIG. 1 is a schematic sectional view of one example of a power generating element of a lithium battery according to the present invention.
FIG. 2 is a drawing illustrating one example of a method for producing a sulfide solid electrolyte material according to the present invention.
FIG. 3 shows the results of Raman spectrometry of sulfide solid electrolyte materials obtained in Examples 1, 2, and 4 and Comparative Example 1.
FIG. 4 is a partially enlarged view of FIG. 3.
FIG. 5 shows the results of X-ray diffraction measurement of sulfide solid electrolyte materials obtained in Examples 1 and 4 and Comparative Example 1.
FIG. 6 shows the measurement results of Li ion conductivity, electron conductivity, and amount of hydrogen sulfide generated regarding sulfide solid electrolyte materials obtained in Examples 1 to 4 and Comparative Example 1.
FIG. 7 shows the results of Raman spectrometry of sulfide solid electrolyte materials obtained in Examples 5 and 6 and Comparative Example 2.

### Description of Reference Numerals

- 1: cathode active material layer
- 2: anode active material layer
- 3: electrolyte layer
- 10: power generating element of lithium battery

### Best Mode for Carrying Out the Invention

Hereinbelow, a sulfide solid electrolyte material, a lithium battery, and a method for producing a sulfide solid electrolyte material according to the present invention will be described in detail.

### A. Sulfide Solid Electrolyte Material

First, a sulfide solid electrolyte material according to the present invention will be described. The sulfide solid electrolyte material according to the present invention has a LiSbS₂ structure. Here, the LiSbS₂ structure used in the present invention refers to a structure shown below.

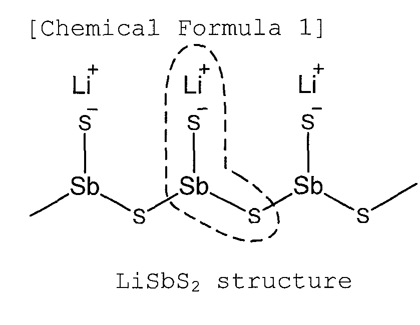

The sulfide solid electrolyte material according to the present invention has a LiSbS₂ structure highly stable to water, which makes it possible to reduce the amount of hydrogen sulfide generated. Therefore, the use of the sulfide solid electrolyte material according to the present invention makes it possible to obtain, for example, a highly-safe lithium battery. Meanwhile, as a structure similar to the LiSbS₂ structure used in the present invention, there is a Li₃SbS₃ structure shown below.

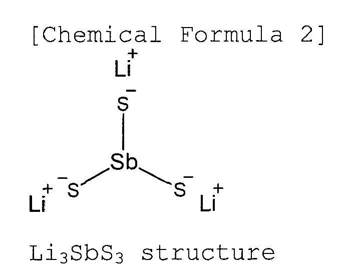

The present inventors have heretofore studied an amorphous sulfide solid electrolyte material having a Li₃SbS₃ structure, and have confirmed that the Li₃SbS₃ structure has high Li ion conductivity. Such a sulfide solid electrolyte material can be obtained by, for example, mixing Li₂S and Sb₂S₃ in a ratio (mole ratio) of 3:1 and mechanically milling the mixture. However, the Li₃SbS₃ structure having high Li ion conductivity has a problem that its stability to water is low. On the other hand, according to the present invention, the generation of hydrogen sulfide can be significantly suppressed while high Li ion conductivity is achieved by, for example, forming not only the Li₃SbS₃ structure but also the LiSbS₂ structure, that is, by forming both the Li₃SbS₃ structure and the LiSbS₂ structure. As described above, Non-Patent Document 1 discloses a polycrystal of Li₃SbS₃. However, a solid phase process disclosed in Non-Patent Document 1 cannot form a LiSbS₂ structure.

In the present invention, the presence of a LiSbS₂ structure can be determined by Raman Spectrometry. More specifically, in a case where the Raman spectrum of a sulfide solid electrolyte material as a measuring object has a peak at around 1050 cm⁻¹, it can be judged that the sulfide solid electrolyte material has a LiSbS₂ structure. Here, the phrase "around 1050 cm⁻¹" refers to a range of, for example, 1000 cm⁻¹ to 1100 cm⁻¹. On the other hand, the presence of the above-described Li₃SbS₃ structure can also be determined by Raman Spectrometry. More specifically, in a case where the Raman spectrum of a sulfide solid electrolyte material as a measuring object has a peak at around 330 cm⁻¹, it can be judged that the sulfide solid electrolyte material has a Li₃SbS₃ structure. Here, the phrase "around 330 cm⁻¹" refers to a range of, for example, 300 cm⁻¹ to 350 cm-¹. Alternatively, in the present invention, the presence of a LiSbS₂ structure may be determined by X-ray diffraction.

The sulfide solid electrolyte material according to the present invention is not particularly limited as long as it has the above-described LiSbS₂ structure. However, the sulfide solid electrolyte material according to the present invention is preferably obtained using a raw material composition containing a Li element, a Sb element, and a S element. This makes it easy to control the composition of the sulfide solid electrolyte material. Further, the sulfide solid electrolyte material according to the present invention is preferably synthesized from a raw material composition by mechanical milling or melting and rapid quenching process. This makes it possible to efficiently form a LiSbS₂ structure.

### (1) Raw material composition

The raw material composition to be used in the present invention contains at least a Li element, a Sb element, and a S element. The composition of the raw material composition is not particularly limited as long as a LiSbS₂ structure can be formed, and any combination can be used. Particularly, the raw material composition to be used in the present invention is preferably a Li₂S-Sb₂S₃-containing composition containing at least Li₂S and Sb₂S₃. That is, the sulfide solid electrolyte material according to the present invention is preferably obtained using a Li₂S-Sb₂S₃-containing composition. This makes it possible to efficiently form a LiSbS₂ structure. The Li₂S-Sb₂S₃-containing composition may be one containing only Li₂S and Sb₂S₃ or one further containing another compound.

Hereinbelow, the Li₂S-Sb₂S₃-containing composition containing only Li₂S and Sb₂S₃ will be described. The Li₂S and Sb₂S₃ used for the Li₂S-Sb₂S₃-containing composition preferably contain few impurities, respectively. This makes it possible to suppress side reactions. An example of a method for synthesizing Li₂S includes a method described in, for example, JP-A No. Hei 7-330312. Further, Li₂S is preferably purified by a method described in, for example, WO 2005/040039. It is to be noted that Sb₂S₃ may be one commercially available.

Further, in a case where the Li₂S-Sb₂S₃-containing composition contains only Li₂S and Sb₂S₃, the molar fraction of Li₂S contained in the Li₂S-Sb₂S₃-containing composition is preferably less than 75%. As will be described later with reference to Comparative Example 1, if the molar fraction of Li₂S is 75%, the ratio between Li₂S and Sb₂S₃ becomes 3:1, and in this case, a Li₃SbS₃ structure is formed but a LiSbS₂ structure is not formed. Particularly, the molar fraction of Li₂S is preferably 73% or less, and more preferably 70% or less. This makes it possible to further suppress the generation of hydrogen sulfide. On the other hand, the lower limit of the molar fraction of Li₂S is not particularly limited as long as a LiSbS₂ can be formed, but the molar fraction of Li₂S is preferably 50% or more, and more preferably 60% or more. By setting the molar fraction of Li₂S to a value within the above range, it is possible for the Li₂S-Sb₂S₃-containing composition to exhibit excellent Li ion conductivity.

Hereinbelow, the Li₂S-Sb₂S₃-containing composition containing Li₂S, Sb₂S₃, and another compound will be described. Examples of another compound include sulfide materials (except Li₂S and Sb₂S₃). Addition of a sulfide material is advantageous in that a sulfide solid electrolyte material having high Li ion conductivity can be obtained. Examples of such a sulfide material include sulfides of B, P, Si, Al, and Ge. Specific examples of such sulfides include B₂S₃, P₂S₃, P₂S_{S}, SiS₂, Al₂S₃, and GeS₂. It is to be noted that in the present invention, two or more sulfide materials may be used.

Further, Li₂S, Sb₂S₃, and a sulfide material A contained in the Li₂S-Sb₂S₃-containing composition preferably satisfy the following relational expression (1) on a molar basis: x(yLi₂S·(100-y)A)·(100-x) (zLi₂S·(100-z)Sb₂S₃), wherein yLi₂S·(100-y) A indicates that the ratio between Li₂S and A is y: (100-y) on a molar basis and zLi₂S·(100-z) Sb₂S₃ indicates that the ratio between Li₂S and Sb₂S₃ is z:(100-z) on a molar basis. Further, the relational expression (1) indicates that the ratio between (yLi₂S·(100-y)A) and (zLi₂S-(100-z)Sb₂S₃) is x: (100-x) on a molar basis. Further, in the relational expression (1), x is 0<x<100, preferably 3≦x≦97; y is 0<y<100; and z is usually 50≦z≦75, preferably 50≦z≦70). Particularly, in the present invention, the sulfide material A is preferably P₂S₅, and in this case, Li₂S, Sb₂S₃, and P₂S₅ contained in the Li₂S-Sb₂S₃-containing composition preferably satisfy the following relational expression: 45 (70Li₂S·30P₂S₅)·55 (50Li₂S·50Sb₂S₃), or the following relational expression: 50 (70Li₂S·30P₂S₅)·50 (50Li₂S·50Sb₂S₃) . This makes it possible to obtain a sulfide solid electrolyte material that has high Li ion conductivity and generates little hydrogen sulfide.

It is to be noted that the Li₂S-Sb₂S₃-containing composition may contain, as another compound other than the sulfide material, at least one lithium ortho-oxosalt selected from the group consisting of Li₃PO₄, Li₄SiO₄, Li₄GeO₄, Li₃BO_{3.} and Li₃AlO₃. By adding such a lithium ortho-oxosalt, it is possible to obtain a more stable sulfide solid electrolyte material.

### (2) Sulfide solid electrolyte material

The sulfide solid electrolyte material according to the present invention is not particularly limited as long as it has the above-described LiSbS₂ structure, but its Li ion conductivity is preferably higher than its electron conductivity. Such a sulfide solid electrolyte material is useful as a material of, for example, a solid electrolyte layer. Further, the Li ion conductivity of the sulfide solid electrolyte material according to the present invention is preferably 1 × 10⁻⁷ S/cm or more, and more preferably 1 × 10⁻⁶ S/cm or more. The sulfide solid electrolyte material according to the present invention may be crystalline or amorphous, and is usually in the form of powder having an average particle size of, for example, 0.1 µm to 50 µm. The sulfide solid electrolyte material according to the present invention can be used for, for example, a lithium battery. The lithium battery may be an all-solid-state lithium battery having a solid electrolyte layer or a lithium battery having a liquid electrolyte. It is to be noted that a method for producing a sulfide solid electrolyte material according to the present invention will be described later in detail in Section C "Method for Producing Sulfide Solid Electrolyte Material".

### B. Lithium Battery

Hereinbelow, a lithium battery according to the present invention will be described. The lithium battery according to the present invention comprises a cathode active material layer containing a cathode active material, an anode active material layer containing an anode active material, and an electrolyte layer formed between the cathode active material layer and the anode active material layer, wherein at least one of the cathode active material layer, the anode active material layer, and the electrolyte layer contains the above-described sulfide solid electrolyte material.

According to the present invention, the use of the above-described sulfide solid electrolyte material makes it possible to provide a lithium battery that generates little hydrogen sulfide.

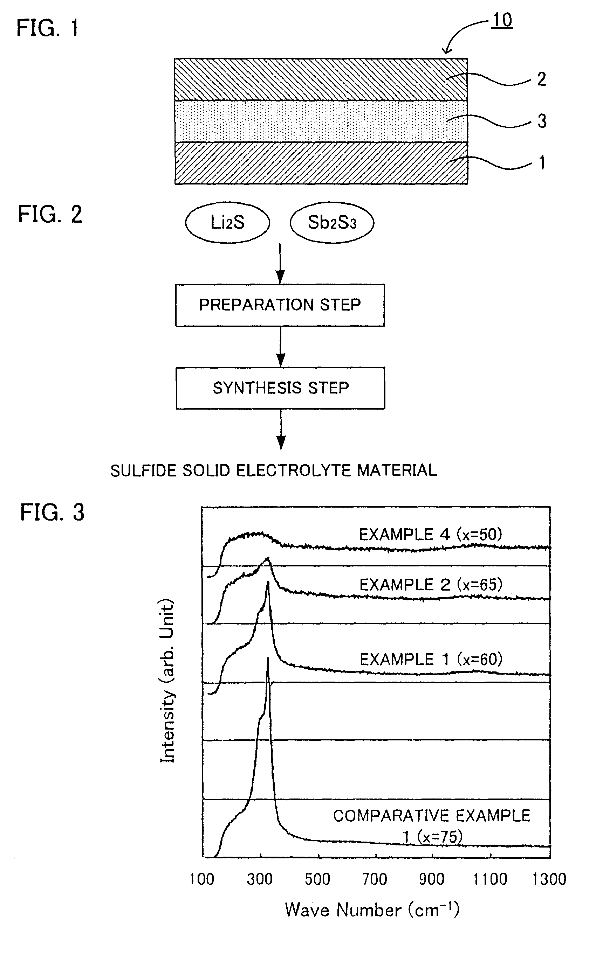

FIG. 1 is a schematic sectional view of one example of a power generating element of a lithium battery according to the present invention. As shown in FIG. 1, a power generating element 10 comprises a cathode active material layer 1 containing a cathode active material, an anode active material layer 2 containing an anode active material, and an electrolyte layer 3 formed between the cathode active material layer 1 and the anode active material layer 2. Further, in the present invention, at least one of the cathode active material layer 1, the anode active material layer 2, and the electrolyte layer 3 contains the above-described sulfide solid electrolyte material.
Hereinbelow, each of the components of the lithium battery according to the present invention will be described.

### 1. Electrolyte layer

First, the electrolyte layer according to the present invention will be described. The electrolyte layer according to the present invention is a layer provided between the cathode active material layer and the anode active material layer. The electrolyte layer is not particularly limited as long as it can conduct Li ion, but is preferably a solid electrolyte layer made of a solid electrolyte material. This makes it possible to obtain a highly-safe lithium battery (all-solid-state battery). Further, in the present invention, the solid electrolyte layer is preferably made of the above-described sulfide solid electrolyte material. This makes it possible to obtain a lithium battery that generates little hydrogen sulfide. The thickness of the solid electrolyte layer is preferably in the range of, for example, 0.1 µm to 1000 µm, and particularly preferably in the range of 0.1 µm to 300 µm. The solid electrolyte layer can be formed by, for example, compression molding of a solid electrolyte material.

The electrolyte layer according to the present invention may be a layer formed from a liquid electrolyte. The use of a liquid electrolyte makes it possible to obtain a high-power lithium battery. In this case, at least one of the cathode active material layer and the anode active material layer usually contains the above-described sulfide solid electrolyte material. The liquid electrolyte usually contains a lithium salt and an organic solvent (nonaqueous solvent). Examples of the lithium salt include inorganic lithium salts such as LiPF₆, LiBF₄, LiClO₄, and LiAsF₆ and organic lithium salts such as LiCF₃SO₃, LiN(CF₃SO₂)₂, LiN(C₂F₅SO₂)₂, and LiC(CF₃SO₂)₃. Examples of the organic solvent include ethylene carbonate (EC) , propylene carbonate (PC), dimethyl carbonate (DMC), diethyl carbonate (DEC), ethyl methyl carbonate (EMC), and butylene carbonate.

### 2. Cathode active material layer

Hereinbelow, the cathode active material layer according to the present invention will be described. The cathode active material layer according to the present invention is a layer containing at least a cathode active material, and if necessary, contains at least one of a solid electrolyte material, a conductive material, and a binder. Particularly, when the cathode active material layer according to the present invention contains a solid electrolyte material, the solid electrolyte material is preferably the above-described sulfide solid electrolyte material. This makes it possible to obtain a lithium battery that generates little hydrogen sulfide. The sulfide solid electrolyte material content in the cathode active material layer varies depending on the kind of lithium battery, but is preferably in the range of, for example, 10 wt% to 90 wt%, and particularly preferably in the range of 20 wt% to 80 wt%. Examples of the cathode active material include LiCoO₂, LiMnO₂, Li₂NiMn₃O₈, LiVO₂, LiCrO₂, LiFePO₄, LiCoPO₄, LiNiO₂, and LiNi_{1/3}Co_{1/3}Mn_{1/3}O₂.

The cathode active material layer according to the present invention may further contain a conductive material. This makes it possible to improve the conductivity of the cathode active material layer. Examples of the conductive material include acetylene black, ketjen black, and carbon fiber. The cathode active material layer according to the present invention may contain a binder. Examples of the binder include fluorine-containing binders. The thickness of the cathode active material layer is preferably in the range of, for example, 0.1 µm to 1000 µm.

### 3. Anode active material layer

Hereinbelow, the anode active material layer according to the present invention will be described. The anode active material layer according to the present invention is a layer containing at least an anode active material, and if necessary, contains at least one of a solid electrolyte material, a conductive material, and a binder. Particularly, when the anode active material layer according to the present invention contains a solid electrolyte material, the solid electrolyte material is preferably the above-described sulfide solid electrolyte material. This makes it possible to obtain a lithium battery that generates little hydrogen sulfide. The sulfide solid electrolyte material content in the anode active material layer varies depending on the kind of lithium battery, but is preferably in the range of, for example, 10 wt% to 90 wt%, and particularly preferably in the range of 20 wt% to 80 wt%. Examples of the anode active material include a metal-based active material and a carbon-based active material. Examples of the metal-based active material include In, Al, Si, and Sn. On the other hand, examples of the carbon-based active material include mesocarbon microbeads (MCMB), high-orientation graphite (HOPG), hard carbon, and soft carbon. The solid electrolyte material and the conductive material for use in the anode active material layer are the same as those described above with reference to the cathode active material layer. The thickness of the anode active material layer is in the range of, for example 0.1 µm to 1000 µm.

### 4. Other components

The lithium battery according to the present invention comprises at least the above-described cathode active material layer, electrolyte layer, and anode active material layer, but usually, further comprises a cathode current collector that collects current from the cathode active material layer and an anode current collector that collects current from the anode active material. Examples of the material of the cathode current collector include SUS, aluminum, nickel, iron, titanium, and carbon. Among them, SUS is preferred. On the other hand, examples of the material of the anode current collector include SUS, copper, nickel, and carbon. Among them, SUS is preferred. Factors such as the thickness and shape of each of the cathode current collector and the anode current collector are preferably appropriately selected according to the intended use of the lithium battery and the like. As a battery case to be used in the present invention, one generally used for lithium batteries can be used. Examples of such a battery case include battery cases made of SUS. In a case where the lithium battery according to the present invention is an all-solid-state battery, the power generating element may be formed inside an insulating ring.

### 5. Lithium battery

The lithium battery according to the present invention may be a primary battery or a secondary battery, but is preferably a secondary battery. This is because a secondary battery can repeat charge and discharge, and is therefore useful as, for example, an in-car battery. The lithium battery according to the present invention may have any shape such as a coin, laminated, cylindrical, or rectangular shape.

A method for producing the lithium battery according to the present invention is not particularly limited as long as the above-described lithium battery can be obtained, and a method similar to a generally-used method for producing a lithium battery can be used. For example, in a case where the lithium battery according to the present invention is an all-solid-state battery, the all-solid-state battery can be produced by, for example, the following method. First, a material for forming a cathode active material layer, a material for forming a solid electrolyte layer, and a material for forming an anode active material layer are pressed in this order to form a power generating element. Then, the power generating element is accommodated in a battery case, and an open end of the battery case is swaged. Further, according to the present invention, it is possible to provide a cathode active material layer, an anode active material layer, and a solid electrolyte layer, each of which contains the above-described sulfide solid electrolyte.

### C. Method for Producing Sulfide Solid Electrolyte Material

Hereinbelow, a method for producing a sulfide solid electrolyte material according to the present invention will be described. The method for producing a sulfide solid electrolyte material according to the present invention comprises the steps of: preparing a raw material composition containing a Li element, a Sb element, and a S element in such a ratio that a LiSbS₂ structure can be formed; and synthesizing a sulfide solid electrolyte material having the LiSbS₂ structure from the raw material composition by mechanical milling.

According to the present invention, it is possible to obtain a sulfide solid electrolyte material having a LiSbS₂ structure by mechanically milling a raw material composition having a predetermined composition.

FIG. 2 is a drawing illustrating one example of the method for producing a sulfide solid electrolyte material according to the present invention. According to the production method shown in FIG. 2, first, lithium sulfide (Li₂S) and antimony sulfide (Sb₂S₃) are prepared as starting materials. Then, these starting materials are blended in such a ratio that a target LiSbS₂ structure can be formed to prepare a raw material composition (preparation step). Then, the raw material composition and milling balls are fed into a pot, and the pot is hermetically sealed. Then, the pot is set to a planetary ball milling apparatus to perform mechanical milling (synthesis step). In this way, a sulfide solid electrolyte material having a LiSbS₂ structure is formed from the raw material composition.

Hereinbelow, each of the steps of the method for producing a sulfide solid electrolyte material according to the present invention will be described. It is to be noted that each of the steps, which will be described later, of the method according to the present invention is preferably performed under an inert gas atmosphere (e.g., Ar gas atmosphere).

### 1. Preparation step

The preparation step of the method according to the present invention is a step of preparing a raw material composition containing a Li element, a Sb element, and a S element in such a ratio that a LiSbS₂ structure can be formed. It is to be noted that a raw material composition to be used in the present invention is the same as that described above in Section A "Sulfide Solid Electrolyte Material", and therefore a description thereof is omitted here.

### 2. Synthesis step

The synthesis step of the method according to the present invention is a step of synthesizing a sulfide solid electrolyte material having the LiSbS₂ structure from the raw material composition by mechanical milling. According to the present invention, the use of mechanical milling makes it possible to perform processing at room temperature, thereby simplifying the production process.

The mechanical milling is not particularly limited as long as the raw material composition can be mixed by applying mechanical energy thereto, and examples thereof include ball milling, turbo milling, mechanofusion, and disk milling. Among them, ball milling is preferred, and planetary ball milling is particularly preferred. This makes it possible to efficiently obtain a sulfide solid electrolyte material having a LiSbS₂ structure.

Various conditions for the mechanical milling are preferably set so that a sulfide solid electrolyte material having a LiSbS₂ structure can be obtained. For example, in a case where a sulfide solid electrolyte material is synthesized by planetary ball milling, a raw material composition and milling balls are fed into a pot, and processing is performed at a predetermined rotation speed for a predetermined period of time. In general, a higher rotation speed results in a higher rate of generation of a sulfide solid electrolyte material, and a longer processing time results in a higher rate of conversion from a raw material composition to a sulfide solid electrolyte material. A rotation speed for planetary ball milling is preferably in the range of, for example, 200 rpm to 500 rpm, and particularly preferably in the range of 250 rpm to 400 rpm. A processing time for planetary ball milling is preferably set so that the synthesis of a sulfide solid electrolyte material can satisfactorily proceed.

### 3. Others

A sulfide solid electrolyte material obtained by the method according to the present invention is the same as that described above in Section A. "Sulfide Solid Electrolyte Material", and therefore a description thereof is omitted here. According to the present invention, it is also possible to provide a sulfide solid electrolyte material obtained by performing the above-described preparation step and synthesis step.

The present invention is not limited to the above embodiments. The above-described embodiments are mere examples, and those having substantially the same structure as technical ideas described in the appended claims and providing similar effects are included in the scope of the present invention.

### Examples

Hereinbelow, the present invention will be more specifically described with reference to the following examples.

### <Example 1>

Lithium sulfide (Li₂S) and antimony sulfide (Sb₂S₃) were prepared as starting materials. Then, 0.2399 g of Li₂S powder and 0.7601 g of Sb₂S₃ powder were weighed in a glove box filled with argon gas, and were then mixed in an agate mortar to obtain a raw material mixture. Then, the raw material mixture was fed into a 45 mL zirconia pot, and zirconia balls (φ 10 mm, 10 balls) were further fed into the pot, and then the pot was completely hermetically sealed. The pot was set to a planetary ball milling apparatus, and mechanical milling was performed at a rotation speed of 370 rpm for 40 hours to obtain a sulfide solid electrolyte material (70Li₂S-30Sb₂S₃).

### <Example 2>

A sulfide solid electrolyte material (65Li₂S-35Sb₂S₃) was obtained in the same manner as in Example 1 except that the amount of Li₂S was changed to 0.2007 g and the amount of Sb₂S₃ was changed to 0.7993 g.

### <Example 3>

A sulfide solid electrolyte material (60Li₂S-40Sb₂S₃) was obtained in the same manner as in Example 1 except that the amount of Li₂S was changed to 0. 1686 g and the amount of Sb₂S₃ was changed to 0.8314 g.

### <Example 4>

A sulfide solid electrolyte material (50Li₂S-50Sb₂S₃) was obtained in the same manner as in Example 1 except that the amount of Li₂S was changed to 0.1191 g and the amount of Sb₂S₃ was changed to 0.8809 g.

### <Comparative Example 1>

A sulfide solid electrolyte material (75Li₂S-25Sb₂S₃) was obtained in the same manner as in Example 1 except that the amount of Li₂S was changed to 0.2886 g and the amount of Sb₂S₃ was changed to 0.7114 g.

### <Evaluation 1>

### (Raman spectrometry)

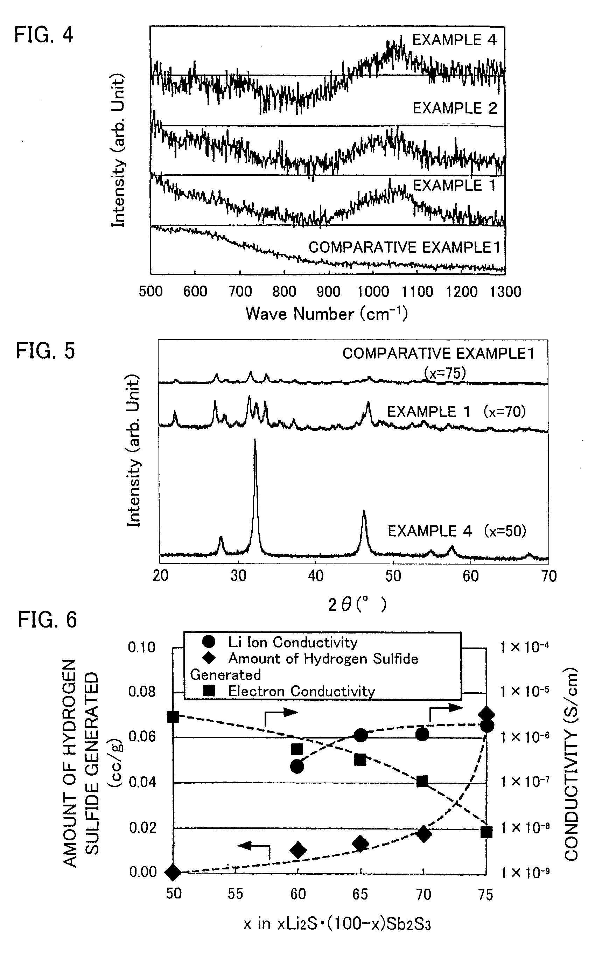

Raman spectrometry was performed on the sulfide solid electrolyte materials obtained in Examples 1, 2, and 4 and Comparative Example 1. The measurement results are shown in FIGS. 3 and 4. It is to be noted that FIG. 4 is a partially enlarged view of FIG. 3. As shown in FIGS. 3 and 4, in the case of the sulfide solid electrolyte material obtained in Example 1, a peak was detected at around 1050 cm⁻¹ From the result, it was confirmed that the sulfide solid electrolyte material (70Li₂S-30Sb₂S₃) obtained in Example 1 had a LiSbS₂ structure. Further, in the case of the sulfide solid electrolyte material obtained in Example 1, a peak was detected also at around 330 cm⁻¹. From the result, it was confirmed that the sulfide solid electrolyte material obtained in Example 1 had both a LiSbS₂ structure and a Li₃SbS₃ structure.

Also, in the case of the sulfide solid electrolyte material (65Li₂S-35Sb₂S₃) obtained in Example 2, a peak at around 1050 cm⁻¹ and a peak at around 330 cm⁻¹ were detected. From the result, it was confirmed that the sulfide solid electrolyte material obtained in Example 2 had both a LiSbS₂ structure and a Li₃SbS₃ structure. In the case of the sulfide solid electrolyte material (50Li₂S-50Sb₂S₃) obtained in Example 4, a peak at around 1050 cm⁻¹ was detected, but a peak at around 330 cm⁻¹ was not detected. From the result, it was confirmed that the sulfide solid electrolyte material obtained in Example 4 had a LiSbS₂ structure but did not have a Li₃SbS₃ structure.

On the other hand, in the case of the sulfide solid electrolyte material (75Li₂S-25Sb₂S₃) obtained in Comparative Example 1, a peak at around 330 cm⁻¹ was detected, but a peak at around 1050 cm⁻¹ was not detected. From the result, it was confirmed that the sulfide solid electrolyte material obtained in Comparative Example 1 had a Li₃SbS₃ structure but did not have a LiSbS₂ structure.

### (X-ray diffraction measurement)

The sulfide solid electrolyte materials obtained in Examples 1 and 4 and Comparative Example 1 were analyzed by X-ray diffraction (Device: RINT-UltimaIII®, Measurement conditions: scanning angle range 20° to 70°, scanning rate 2°/min). The results are shown in FIG. 5. In the case of the sulfide solid electrolyte material obtained in Example 4, a peak derived from a LiSbS₂ structure was detected. In the case of the sulfide solid electrolyte material obtained in Comparative Example 1, a peak derived from a Li₃SbS₃ structure was detected. In the case of the sulfide solid electrolyte material obtained in Example 1, a peak derived from a LiSbS₂ structure and a peak derived from a Li₃SbS₃ structure were detected.

### (Measurement of Li ion conductivity, electron conductivity, and amount of hydrogen sulfide generated)

The Li ion conductivity and electron conductivity of each of the sulfide solid electrolyte materials obtained in Examples 1 to 4 and Comparative Example 1 and the amount of hydrogen sulfide generated from each of these sulfide solid electrolyte materials were measured. The Li ion conductivity was measured in the following manner. First, 100 mg of the sulfide solid electrolyte material was pressed at a pressure of 5.1 ton/cm² to obtain a pellet, and the pellet was sandwiched and held between two SUS 304 plates to obtain a bipolar cell. The AC impedance of the bipolar cell was measured under the following conditions.
- Electrode: SUS 304
- Impedance measurement system: Impedance analyzer Model 1260® (manufactured by Solartron)
- Applied voltage: 10 mV
- Measurement frequency: 0.01 Hz to 1 MHz
The Li ion conductivity at room temperature was determined from an impedance plot obtained by the AC impedance measurement. On the other hand, the electron conductivity was measured in the following manner. A current value was measured by applying a voltage of 1 V to the above-described bipolar cell to determine a DC resistance, and the electron conductivity was determined from the DC resistance. The amount of hydrogen sulfide generated was measured in the following manner. A pellet was prepared in the same manner as described above, and the pellet was placed in a hermetically-sealed desiccator (air atmosphere, 1755 cc), and the amount of hydrogen sulfide generated in the first 300 seconds was measured using a hydrogen sulfide sensor. During the measurement, a humidity of 60% and a temperature of 25°C were maintained in the desiccator. The measurement results are shown in FIG. 6.

As can be seen from FIG. 6, the amount of hydrogen sulfide generated from the sulfide solid electrolyte material obtained in Example 1 (x=70) was significantly smaller than that generated from the sulfide solid electrolyte material obtained in Comparative Example 1 (x=75). The reason for this can be considered that the sulfide solid electrolyte material obtained in Example 1 has a LiSbS₂ structure. On the other hand, the sulfide solid electrolyte material obtained in Example 1 and the sulfide solid electrolyte material obtained in Comparative Example 1 both had a high Li ion conductivity of about 1 × 10⁻⁶ S/cm. From the results, it has been confirmed that the sulfide solid electrolyte material obtained in Example 1 can achieve a significant reduction in the amount of hydrogen sulfide generated as compared to the sulfide solid electrolyte material obtained in Comparative Example 1 while keeping high Li ion conductivity comparable to that of the sulfide solid electrolyte material obtained in Comparative Example 1. The sulfide solid electrolyte material obtained in Example 1 and the sulfide solid electrolyte material obtained in Comparative Example 1 both exhibited low electron conductivity. From the results of Examples 2 to 4, it has been confirmed that a higher LiSbS₂ structure content results in a smaller amount of hydrogen sulfide generated. Particularly, the amount of hydrogen sulfide generated from the sulfide solid electrolyte material obtained in Example 4 was 0 (cc/g) . Further, the sulfide solid electrolyte material obtained in Example 4 did not generate hydrogen sulfide even when immersed in water. However, from the viewpoint of balance between the Li ion conductivity and the amount of hydrogen sulfide generated, it has been confirmed that, x preferably satisfies a relational expression of 60 ≦ x < 75.

### <Example 5>

A sulfide solid electrolyte material was obtained in the same manner as in Example 1 except that 0.1801 g of Li₂S, 0.1993 g of P₂S₅, and 0.6206 g of Sb₂S₃ were used as starting materials. The composition of the sulfide solid electrolyte material was 45(70Li₂S.30P₂S₅)-55(50Li₂S-50Sb₂S₃) .

### <Example 6>

A sulfide solid electrolyte material was obtained in the same manner as in Example 1 except that 0.1890 g of Li₂S, 0.2286 g of P₂S₅, and 0.5824 g of Sb₂S₃ were used as starting materials. The composition of the sulfide solid electrolyte material was 50 (70Li₂S·30P₂S₅)·50 (50Li₂S·5oSb₂S₃) .

### <Comparative Example 2>

A sulfide solid electrolyte material was obtained in the same manner as in Example 1 except that 0.3254 g of Li₂S and 0.6746 g of P₂S₅ were used as starting materials. The composition of the sulfide solid electrolyte material was 70Li₂S-30P₂S₅.

### <Evaluation 2>

### (Raman spectrometry)

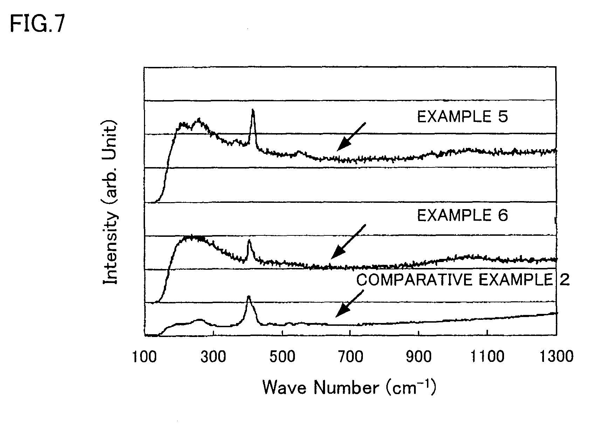

Ramen spectrometry was performed on the sulfide solid electrolyte materials obtained in Examples 5 and 6 and Comparative Example 2. The results are shown in FIG. 7. As shown in FIG. 7, in both the cases of the sulfide solid electrolyte materials obtained in Examples 5 and 6, a peak at around 404 cm⁻¹, a peak at around 418 cm⁻¹, and a peak at around 1050 cm⁻¹ were detected. The presence of the peak at around 1050 cm⁻¹ indicates that both the sulfide solid electrolyte materials obtained in Examples 5 and 6 have a LiSbS₂ structure. It is to be noted that the peak at around 404 cm⁻¹ is derived from a Li₄P₂S₇ structure (i.e., a structure having 4 lithium atoms and S₃P-S-PS₃) and the peak at around 418 cm⁻¹ is derived from a Li₃PS₄ structure. From the results, it has been confirmed that even in a multicomponent system, a LiSbS₂ structure can be formed. On the other hand, in the case of the sulfide solid electrolyte material obtained in Comparative Example 2, a peak at around 404 cm⁻¹ and a peak at around 418 cm⁻¹ were detected, but a peak at around 1050 cm⁻¹ was not detected because of the absence of a LiSbS₂ structure.

### (Measurement of Li ion conductivity and amount of hydrogen sulfide generated)

The Li ion conductivity of each of the sulfide solid electrolyte materials obtained in Examples 5 and 6 and Comparative Example 2 and the amount of hydrogen sulfide generated from each of these sulfide solid electrolyte materials were measured in the same manner as described above in "Evaluation 1". The results are shown in Table 1.

**[Table 1]**

| | Amount of hydrogen sulfide generated (cc/g) | Li ion conductivity (S/cm) |
|---|---|---|
| Example 5 | 0.167 | 4.6 x 10⁻⁵ |
| Example 6 | 0.070 | 3.6 x 10⁻⁵ |
| Comparative Example 2 | 24 | 1.0 x 10⁻⁴ |

As can be seen from Table 1, because of the presence of a LiSbS₂ structure, the amount of hydrogen sulfide generated from the sulfide solid electrolyte material obtained in Example 5 was significantly smaller than that generated from the sulfide solid electrolyte material obtained in Comparative Example 2. On the other hand, there was not much difference in Li ion conductivity between the sulfide solid electrolyte material obtained in Example 5 and the sulfide solid electrolyte material obtained in Comparative Example 2. From the results, it has been confirmed that the sulfide solid electrolyte material obtained in Example 5 can achieve a significant reduction in the amount of hydrogen sulfide generated as compared to the sulfide solid electrolyte material obtained in Comparative Example 2 while keeping high Li ion conductivity comparable to that of the sulfide solid electrolyte material obtained in Comparative Example 2. Further, from the result of Example 6, it has been confirmed that a higher LiSbS₂ structure content results in a smaller amount of hydrogen sulfide generated.

## Claims

1. A sulfide solid electrolyte material having a LiSbS₂ structure.

2. The sulfide solid electrolyte material according to claim 1, using a Li₂S-Sb₂S₃-containing composition which contains Li₂S and Sb₂S₃.

3. The sulfide solid electrolyte material according to claim 2, **characterized in that** the Li₂S-Sb₂S₃-containing composition contains only the Li₂S and the Sb₂S₃.

4. The sulfide solid electrolyte material according to claim 3, **characterized in that** a molar fraction of the Li₂S contained in the Li₂S-Sb₂S₃-containing composition is less than 75%.

5. The sulfide solid electrolyte material according to claim 2, **characterized in that** the Li₂S-Sb₂S₃-containing composition further contains a sulfide material in addition to the Li₂S and the Sb₂S₃.

6. The sulfide solid electrolyte material according to claim 5, **characterized in that** the sulfide material is a sulfide of B, P, Si, Al, or Ge.

7. A lithium battery comprising a cathode active material layer containing a cathode active material, an anode active material layer containing an anode active material, and an electrolyte layer formed between the cathode active material layer and the anode active material layer, **characterized in that** at least one of the cathode active material layer, the anode active material layer, and the electrolyte layer contains the sulfide solid electrolyte material according to any one of claims 1 to 6.

8. The lithium battery according to claim 7, **characterized in that** the electrolyte layer is a solid electrolyte layer made of the sulfide solid electrolyte material.

9. A method for producing a sulfide solid electrolyte material, comprising the steps of:
preparing a raw material composition containing a Li element, a Sb element, and a S element in such a ratio that a LiSbS₂ structure can be formed; and
synthesizing a sulfide solid electrolyte material having the LiSbS₂ structure from the raw material composition by mechanical milling.

10. The method for producing a sulfide solid electrolyte material according to claim 9, **characterized in that** the raw material composition is a Li₂S-Sb₂S₃-containing composition which contains Li₂S and Sb₂S₃.

11. The method for producing a sulfide solid electrolyte material according to claim 10, **characterized in that** the Li₂S-Sb₂S₃-containing composition contains only the Li₂S and the Sb₂S₃.

12. The method for producing a sulfide solid electrolyte material according to claim 11, **characterized in that** a molar fraction of the Li₂S contained in the Li₂S-Sb₂S₃-containing composition is less than 75%.
